Europäisches Patentamt

European Patent Office

Office européen des brevets

(11) Publication number: **0 293 725**
**A2**

# (12) EUROPEAN PATENT APPLICATION

(21) Application number: 88108280.4

(22) Date of filing: 25.05.88

(51) Int. Cl.⁴: **G02B 6/44**

(30) Priority: 01.06.87 IT 2073687

(43) Date of publication of application:
07.12.88 Bulletin 88/49

(84) Designated Contracting States:
**DE ES FR GB**

(71) Applicant: **SOCIETA' CAVI PIRELLI S.p.A.**
**Piazzale Cadorna 5**
**I-20123 Milano(IT)**

(72) Inventor: **Calzolari, Pietro**
**Viale Restelli, 37**
**Milan(IT)**
Inventor: **Portinari, Antonio**
**Via Roma, 7**
**Sesto Sang Giovanni (Milan)(IT)**

(74) Representative: **Mariani, Giorgio, Dr. et al**
**INDUSTRIE PIRELLI S.p.A. Direzione Brevetti**
**Piazzale Cadorna, 5**
**I-20123 Milano(IT)**

(54) **Optical fiber cable.**

(57) The invention concerns an optical fiber cable of
the type comprising a core (2) of plastic material
embedding small pipes (3) in which the optical fibers
(4) are contained in loose condition.

The small pipes (3) estending along the core (2)
of plastic material are completely embedded in said
core (2) but are not linked to it.

Fig. 1

EP 0 293 725 A2

## OPTICAL FIBER CABLE

The present invention relates to optical fiber cables of the type comprising a core of plastic material in which small pipes containing optical fibers are completely embedded.

Various cables of the above indicated type are already known.

For instance, an optical fiber cable of this kind is that described in the U.S.Patent Nr.3 865 466.

A cable according to said patent has a core of plastic material extruded around a wire or strand, made for example of metal and practically inextensible in the field of the stresses to be borne by the cable, which is situated in the core's radially innermost position; small pipes containing optical fibers are embedded in said core of plastic material.

The small pipes, completely surrounded by, and in contact with, the plastic material forming the cable core, are also made of plastic material and extend longitudinally of the cable, following a path which can be parallel to the cable axis or can have the form of a close or an open helix with respect to said axis.

In the particular embodiment of the cable according to the above indicated patent, the plastic materials forming the core and the small pipes are both a polyethylene-base composition; consequently, being said materials equal, the small pipes are unavoidably linked intimately to the plastic material forming the cable core in which they have been embedded during the shaping of the latter extrusion.

Another already known cable of the type is disclosed in the U.S. Patent Nr.4 191 448; it differs from that cited above only in respect of the particular structure of the small pipes containing the optical fibers.

In fact, the small pipes of this cable are obtained from a tape of plastic/metal laminate shaped helically to take a tubular form.

Also in the U.S.Patent Nr.4 191 448 the small pipes are linked to the plastic material forming the core into which they are embedded.

In these conventional cables, the link existing between the plastic material forming the core and the small pipes containing the optical fibers gives rise to serious difficulties when joints are to be effected.

In fact, to carry out a joint, the cables' ends are to be prepared by stripping the terminal portion of their components and in particular the mechanically resistant wire or strand, the small pipes and the optical fibers, with respect to the cable core, to effect subsequently the connection between the individual elements of the two cables.

The link which - in the conventional cables of the above described type - exists between the small pipes and the cable core of plastic material makes the operation of stripping the terminal portions of the small pipes extremely difficult, troublesome and often practically impossible.

The same difficulties are encountered when the cables are to be connected to the apparatuses associted thereto, as receivers, transmitters, repeaters and the like, since also for these connections the cables' ends are to be prepared as required for the joints.

If it is considered that both the cable core of plastic material and the small pipes carry out a mechanically protective function on the optical fibers, whenever in the conventional cables the impossibility in practice of stripping the ends of the small pipes with respect to the core is noticed, a scaled down protection of the optical fibers during the performance of joints and connections to the various apparatuses associated to the cables cannot be ensured, with a consequent increase in the risk of subjecting the optical fibers to prejudicial stresses.

The present invention aims at providing optical fiber cables of the type comprising a core of plastic material embedding small pipes containing optical fibers, which do not show the above described disadvantages.

Accordingly, the object of the present invention is an optical fiber cable comprising a core of plastic material embedding at least one small pipe which extends longitudinally along said core and which contains at least one optical fiber, the cable being characterized in that anti-adhesion means are provided at the zone of contact between the small pipes and the plastic material of the core embedding them.

The present invention will be better understood from the following detailed description given only by way of not limiting example and made with reference to the attached sheets of drawings, in which:

- figure 1 is a perspective view of a portion of cable according to the invention, and

- figure 2 is a perspective view of a portion of cable according to an alternative embodiment of the invention.

A cable according to the invention has a body of plastic material constituting the cable core, which is preferably provided with a mechanically resistant wire or strand which occupies its radially innermost portion.

At least one small pipe, containing at least one optical fiber, is embedded and preferably completely embedded in the body of plastic material forming the cable core.

The small pipe extends longitudinally within the cable core and is parallel to the axis thereof, or preferably it follows a helical path around said axis.

In the latter case the helical path can have the shape of a close helix or of an open helix, namely can be formed by alternate S-shaped and Z-shaped portions.

A substantial feature of a cable according to the invention is represented by the provision of anti-adhesion means between the outer surface of the small pipe and the plastic material of the core embedding it.

In the present application, the expression "anti-adhesion means" refers to any expedient which is able to avoid the link between the small pipes and the core of plastic material embedding them, but which allows a direct contact between them or, alternatively, constitutes an interposed element, whose presence avoids any discontinuity of material in the cable.

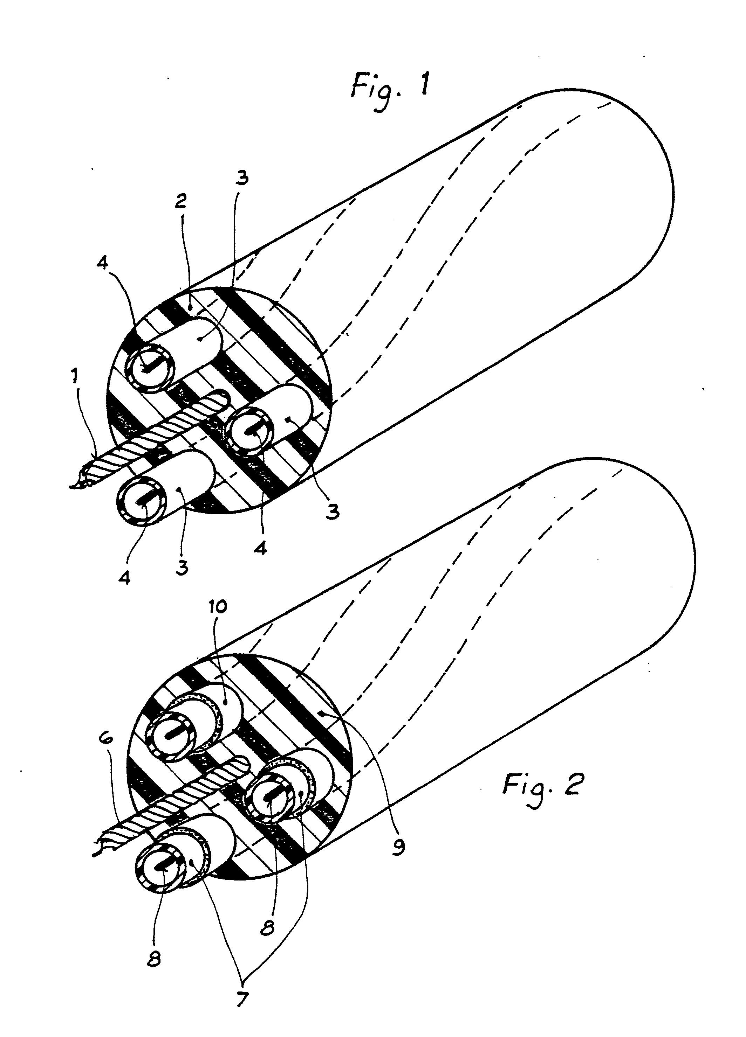

A particular embodiment of a cable according to the invention is represented in figure 1.

The cable illustrated in said figure has the following structure.

A strand 1, formed for instance by a plurality of wires made of metal, glass fiber, aromatic polyamide and the like, occupies the radially innermost region of the cable and is coaxial to the cable axis.

The strand 1 is sized in such a way as to be mechanically resistant and practically inextensible under any mechanical tensile stress to which a cable may be subjected during its manufacture and/or laying.

Around strand 1 there is a body 2 of plastic material, having circular shape in the section perpendicular to the cable axis, which adheres to the outer surface of said strand and is joined to it.

Small pipes 3, extending along the cable in the form of an open helix, are completely embedded in the body 2 of plastic material and are in direct contact with it; each small pipe contains an optical fiber 4 in a loose manner.

The small pipes 3 are made of a material incompatible with the plastic material forming the cable core 2. If the pipes are made of several superimposed layers, at least the radially outermost layer is made of a material incompatible with the plastic material forming the cable core. In the present specification the term "incompatible", referred to the materials of the two components, means that they have such a chemical nature that, when they are brought into mutual contact, even at the softening temperature of at least one of the, they do not originate a link along the mutually contacting surfaces.

For instance, when the small pipes are made of a material selected among polybutene terephthalate and polyamides, the plastic material forming the core is selected among low density polyethylene, polypropylene and polyurethanes and viceversa.

In the cable of figure 1 the incompatibility between the materials forming the small pipes and the cable core represents a particular embodiment of the anti-adhesion means between said components.

Around body 2 forming the cable core, other elements used in conventional cables and not represented in figure 1 can be present, as a sheath, covering layers for the latter, made of a plastic material having a low friction coefficient to facilitate the cable sliding during the laying operation, and the like.

Figure 2 represents an alternative embodiment of a cable according to the invention.

The cable shown in figure 2 comprises the same elements as that of figure 1, that is a mechanically resistant strand 6, a plurality of small pipes 7 containing an optical fiber 8 and a body 9 of plastic material embedding pipes and strand.

The cable represented in figure 2 differs from that of figure 1 only for the fact that, between the outer surface of pipes 7 and the plastic material of core 9, provision is made of an anti-adhesion layer 10, formed by a liquid or doughy material and in general by a fluid having a viscosity ranging between 1 and 100,000 cts, selected for example among silicone oils, water emulsions of silicone oils, silicone greases, petroleum jelly and the like.

This layer 10, preventing any link between the small pipes 7 and the cable core 9, constitutes a particular anti-adhesion means between said elements, so that in this case no limitation exists in choosing the materials intended to form the small pipes and the cable core.

In an alternative embodiment, not illustrated, of the cable shown in figure 2, said layer 10 is represented by a layer of powder interposed between the outer surface of the small pipes and the plastic material in which they are embedded.

Said layer of powder forming layer 10 represents another particular embodiment of anti-adhesion means between the small pipes and the plastic material forming the core, thus avoiding limitations in the materials forming said pipes and said core.

Powers able to carry out the above indicated action are for example mica powder, talc powder and the like. Preferably, to form layer 10, said powders are applied by resorting to the use of any substance which is able to retain the powder on the outer surface of the small pipes; an example of said substance is for instance a grease covering the pipes' surface and retaining the powders on itself.

From the description of the above indicated particular embodiments of a cable according to the invention and from the following considerations it will be seen that the invention achieves the purposes it aimed at.

The presence of anti-adhesion means between the outer surface of the small pipes and the plastic material embedding them results in the possibility of ensuring the independency of the small pipes with respect of the plastic material embedding them, but at the same time does not give rise to any discontinuity of material in the cable structure.

Said independency between the pipes and the cable core of plastic material embedding them, both having the task of protecting at least mechanically the optical fibers contained in the cable, has the effect of making possible, at the cables' ends, a scaling down of the protections of said optical fibers, carried out in an expedite and easy manner by simply engraving at first the plastic material by a blade and then by removing it by cutting.

As these operations are facilitated by the absence of any link between the small pipes and the core, they can be effected with the utmost care, so that the risk of damaging the small pipes during the core removal is greatly reduced.

Although some preferred embodiments of the invention have been described and illustrated, it is undertood that it includes in its scope any other embodiment deriving from the above indicated inventive idea.

## Claims

1) An optical fiber cable comprising a core (2) of plastic material embedding at least one small pipe (3) which extends longitudinally along said core (2) which contains at least one optical fiber (4), the cable being characterized in that anti-adhesion means are provided at the zone of contact between the small pipes (3) and the plastic material of the core (2) embedding them.

2) An optical fiber cable as in claim 1, characterized in that the anti-adhesion means consist in the fact that at least the radially outermost layer of the small pipe (3) is made of a material incompatible with the plastic material of the core (2) embedding it.

3) An optical fiber cable as in claim 2, characterized in that, when the small pipe (3) is made of a material selected among polybutene terephthalate, polyamides, high density polyethylene and polypropylene, the plastic material of the core (2) is polyurethane and vice versa.

4) An optical fiber cable as in claim 2, characterized in that, when the small pipe (3) is made of a material selected among polybutene terephthalate and polyamides, the plastic material of the core (2) is selected among low density polyethylene, polypropylene and polyurethanes, and vice versa.

5) An optical fiber cable as in claim 1, characterized in that the anti-adhesion means are represented by a layer (10) of a fluid, having a viscosity ranging between 1 and 100,000 cts, interposed between the outer surface of the small pipe (7) and the plastic material of the core (9) embedding it.

6) An optical fiber cable as in claim 5, characterized in that the fluid is selected among a silicone oil, a water emulsion of silicone oil, a silicone grease, a petroleum jelly.

7) An optical fiber cable as in claim 1, characterized in that the anti-adhesion means are represented by a layer (10) of powders interposed between the outer surface of the small pipe (7) and the plastic material of the core (9) embedding it.

8) An optical fiber cable as in claim 1, characterized in that the powders interposed between the outer surface of the small pipe (7) and the plastic material (9) embedding it are dispersed in a grease.

9) An optical fiber cable as in claims 7 and 8, characterized in that the powders are selected among mica and talc powders.

P. 568

Fig. 1

Fig. 2